# EUROPÄISCHE PATENTSCHRIFT

(11) **EP 2 583 849 B1**
(45) Veröffentlichungstag und Bekanntmachung des Hinweises auf die Patenterteilung: **04.05.2016**
(21) Anmeldenummer: 12007135.2
(22) Anmeldetag: 15.10.2012
(51) Int. Cl.: B60J 7/19, B60J 7/16

(54) **Aufstelldach**
Pop-up roof
Toit rehaussable

(30) Priorität: 20.10.2011 DE 102011054633; 28.03.2012 DE 102012102669
(43) Veröffentlichungstag der Anmeldung: 24.04.2013
(73) Patentinhaber: Mobil Invest GmbH, 30629 Hannover (DE)
(72) Erfinder: Gödecke, Heiner, 33397 Rietberg (DE); Siegert, Thomas, 33378 Rheda-Wiedenbrück (DE)
(74) Vertreter: Rolf, Gudrun, LL.M

(56) Entgegenhaltungen:
- DE-A1- 10 123 790
- DE-A1-102005 025 783
- GB-A- 2 059 498

## Beschreibung

Die Erfindung betrifft ein Aufstelldach, insbesondere für ein Campingfahrzeug oder einen Campinganhänger gemäß dem Oberbegriff des Hauptanspruches.

Es ist eine Vorrichtung zum Öffnen und Schließen des Aufstelldachs an Aufstelldachfahrzeugen bekannt, DE 101 23 790 A1, welches einen aufstellbaren Dachflächenanteil mit flexiblen Seitenwänden aufweist sowie jeweils beidseitige hintere Gelenkbeschläge und vordere Aufstellmechaniken, wobei letztere jeweils aus einem hinteren Tragarm mit einer hinteren Schwenkachse und einem am hinteren Tragarm angelenkten vorderen Tragarm sowie einem ebenfalls daran angelenkten Stützelement bestehen, welches mit einer hinteren Schwenkachse über eine Gelenkverbindung mit dem vorderen Ende des hinteren Tragarmes verbunden ist, sowie eine vordere Schwenkachse und einem als Hydraulikzylinder ausgebildeten Linearantrieb.

Dieser hydraulische Linearantrieb erfordert das Vorhandensein mindestens einer Hydraulikpumpe im Fahrzeug sowie deren Anschluss über Hydraulikschläuche an die beiden Hydraulikzylinder der Aufstellmechaniken, sodass zum einen irgendwo im Fahrzeug ein erhebliches Bauvolumen für die Hydraulikpumpe zur Verfügung gestellt werden muss, ebenso wie eine aufwändige Verlegung von Hydraulikschläuchen erforderlich wird, die einer erhöhten Aufmerksamkeit bedarf, da das Hydrauliksystem mindestens von Zeit zu Zeit gewartet bzw. entlüftet werden muss und auch die Gefahr besteht, dass nach einem Leck im System das Innere eines Fahrzeuges mit Hydrauliköl verschmutzt werden kann. Des Weiteren ist es bei einer solchen hydraulischen Vorrichtung erforderlich, dass ein aufgestelltes Dach auf Grund möglichen Druckabfalls im Hydrauliksystem gegen ein ungewolltes Absinken mechanisch gesichert werden muss, was das Vorsehen zusätzlicher mechanischer Sicherheitsstützelemente erfordert.

Aufgabe der Erfindung ist es deshalb, ein Aufstelldach für ein Fahrzeug oder einen Fahrzeuganhänger zur Verfügung zu stellen, welches platzsparend, wartungsarm und betriebssicher aufgebaut ist, ohne eine zusätzliche mechanische Sicherheitsabstützung zu erfordern.

Die Lösung dieser Aufgabe ergibt sich in Verbindung mit den Oberbegriffsmerkmalen des ersten Patentanspruches erfindungsgemäß im Zusammenspiel mit dessen kennzeichnenden Merkmalen insbesondere dadurch, dass das Stützelement als Hubzylinder mit integriertem Linearantrieb ausgeführt ist, wobei die hintere Schwenkachse des hinteren Tragarmes ein karosseriefestes hinteres Gegenlager bildet und der hintere Tragarm im zusammengefahrenen Zustand des Hubzylinders eine liegende Ruheposition einnimmt und in einem ausgefahrenen Zustand des Hubzylinders um die ortsfeste Schwenkachse in eine angestellte Öffnungsposition verschwenkt ist.

Diese vorteilhafte Ausgestaltung der Erfindung erspart zum einen die Anordnung einer zentralen Hydraulikpumpe in einem Fahrzeug oder Fahrzeuganhänger, da der Linearantrieb unmittelbar im Hubzylinder angeordnet ist. Des Weiteren ist der Linearantrieb direkt in die Aufstellmechanik integriert, so dass die gesamte Baueinheit sehr kompakt ausgeführt werden kann und nur wenig Anpassungsarbeiten an mit einem solchen Aufstelldach aus- oder nachzuzurüstenden Fahrzeugen erforderlich ist.

Gemäß einer besonders bevorzugten Ausführungsform der Erfindung ist der Hubzylinder als Elektrohubzylinder mit integriertem Elektromotor ausgeführt, wobei ein solcher Elektrohubzylinder auch im strom- bzw. spannungsfreien Zustand sehr hohe statische Kräfte aufnehmen kann, sodass keine zusätzliche mechanische Sicherung gegen ein ungewolltes Absinken des Aufstelldachs vorgesehen werden muss, insbesondere dann nicht, wenn der Elektrohubzylinder selbsthemmend, etwa mit einer Hubspindel und einer angetriebenen Spindelmutter, ausgeführt ist.

Das erfinderische Aufstelldach benötigt so zu seiner Funktion nur das Verlegen von elektrischen Leitungen und das Anordnen von elektrischen Schaltern, wodurch sich der Einbauaufwand eines solchen Aufstelldachs ganz wesentlich reduziert. Ebenfalls entfallen der Einbau, die Pflege und die Wartung jeglicher Hydraulik, so dass sich auch wartungstechnisch wesentliche Vorteile gegenüber dem bekannten Stand der Technik einstellen.

Weitere Vorteile des Gegenstandes der Erfindung ergeben sich mit und in Kombination aus den weiteren nachfolgenden Schutzansprüchen.

Gemäß einer besonders bevorzugten Ausführungsform der Erfindung ist das vordere Ende des Elektrohubzylinders um eine Schwenkachse eines Schlittens schwenkgelagert, wobei der Schlitten parallel zur karosseriefesten Dachfläche in einer ebenfalls karosseriefesten Schlittenbahn geführt ist und an ihm eine Stange angelenkt ist, die sich nach vorne erstreckt und ihrerseits an einem gelenkig gelagerten Schließhebel einer Bolzenaufnahme angreift. Hierdurch wird es möglich, dass durch die Bewegung des Hubzylinders eine Zugkraft über den Schlitten und die Schubstange auf den Schließhebel ausgeübt werden kann, der sich um eine Achse in der Bolzenaufnahme so verschwenken lässt, dass er einen Schließbolzen ver- und entriegeln kann, der beispielsweise am freien Ende des vorderen Tragarmes angeordnet sein kann oder aber ortsfest am aufzustellenden Dachflächenanteil des Aufstelldaches.

Hierdurch ergibt sich als weiterer Vorteil, dass das Aufstelldach gleichzeitig mit einem mechanischen Verschluss ausgestattet wird, so dass auf weitere, etwa manuell zu bedienende Verriegelungen verzichtet werden kann.

Nachfolgend ist ein Ausführungsbeispiel der Erfindung anhand von Zeichnungen näher beschrieben. Es zeigen:

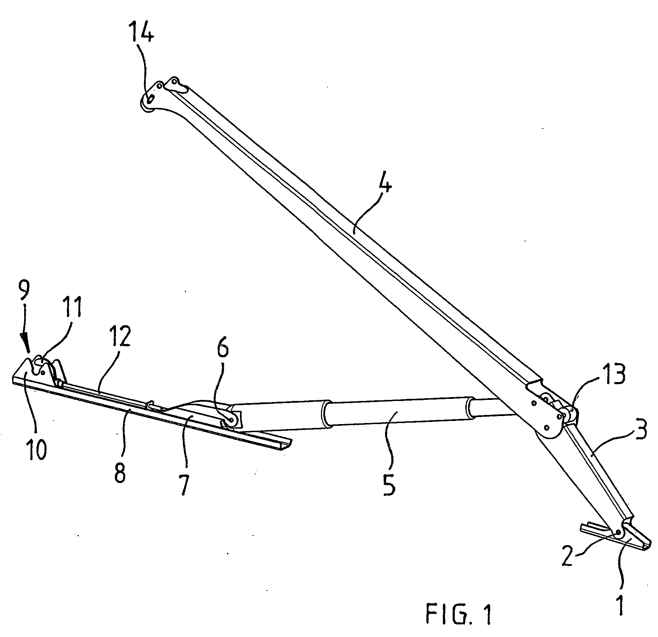

- Fig.1: eine isometrische Ansicht einer Aufstellmechanik mit integriertem Verschluss in einer Öffnungsposition,
- Fig. 2: eine geschnittene Seitenansicht der Aufstellmechanik gem. Fig. 1 in einer verriegelten Ruheposition,
- Fig. 3: die Aufstellmechanik der Fig. 2 in einer ersten entriegelten Zwischenposition,
- Fig. 4: die Aufstellmechanik in einer zweiten Zwischenposition und
- Fig. 5: die Aufstellmechanik in einer vollständigen Öffnungsposition.

Die Aufstellmechanik des Aufstelldaches für ein Fahrzeug oder einen Fahrzeuganhänger mit einem aufstellbaren Dachflächenanteil besteht jeweils aus einem hinteren Gelenkbeschlag und einer vorderen Aufstellmechanik, die jeweils beidseitig unter dem Dachflächenanteil zwischen diesem und dem karosseriefesten Dachflächenanteil angeordnet sind. Als hinterer Bereich gilt bei der Beschreibung der Bereich des Gelenkbeschlages, wo hingegen der vordere Bereich im Bereich der Aufstellmechanik angesiedelt ist, so dass es prinzipiell wahlfrei ist, ob das Aufstelldach sich im Wesentlichen nach vorne, nach hinten oder zur Seite öffnet, wobei einer Einfachheit halber hier von einem Aufstelldach ausgegangen wird, welches sich im vorderen Bereich eines Fahrzeugs weiter nach oben öffnet als im hinteren Bereich.

Die Aufstellmechanik weist zunächst ein hinteres Gegenlager 1 auf, welches ortsfest auf dem karosseriefesten Dachflächenanteil angeordnet ist ebenso wie eine vordere Schlittenbahn 8, die zusätzlich mit einem Verschluss 10 zur Verriegelung der Aufstellmechanik und damit des gesamten Aufstelldaches ausgestattet ist.

Das Gegenlager 1 weist eine ortsfeste Schwenkachse 2 auf, in der ein hinterer Tragarm 3 verschwenkbar gelagert ist, an dessen vorderen Ende eine weitere Schwenkachse vorgesehen ist, an der der Elektrohubzylinder 5 angelenkt ist, der sich von dort nach vorne erstreckt und seinerseits über eine Schwenkachse 6 am in der Schlittenbahn 8 geführten Schlitten 7 gelenkig gelagert ist.

Am Schlitten 7 ist eine nach vorne gerichtete Stange 12 angeordnet, die sowohl Schub- als auch Druckkräfte übertragen kann und die an einem Schließhebel 11 angreift, der um eine weitere Achse verdrehbar ist, um in einer Verschlussposition des Aufstelldaches einen Schließbolzen 14, der am vorderen Ende des vorderen Tragarmes 4 angeordnet ist, in einer Bolzenaufnahme 10 des Verschlusses 9 formschlüssig verriegeln zu können.

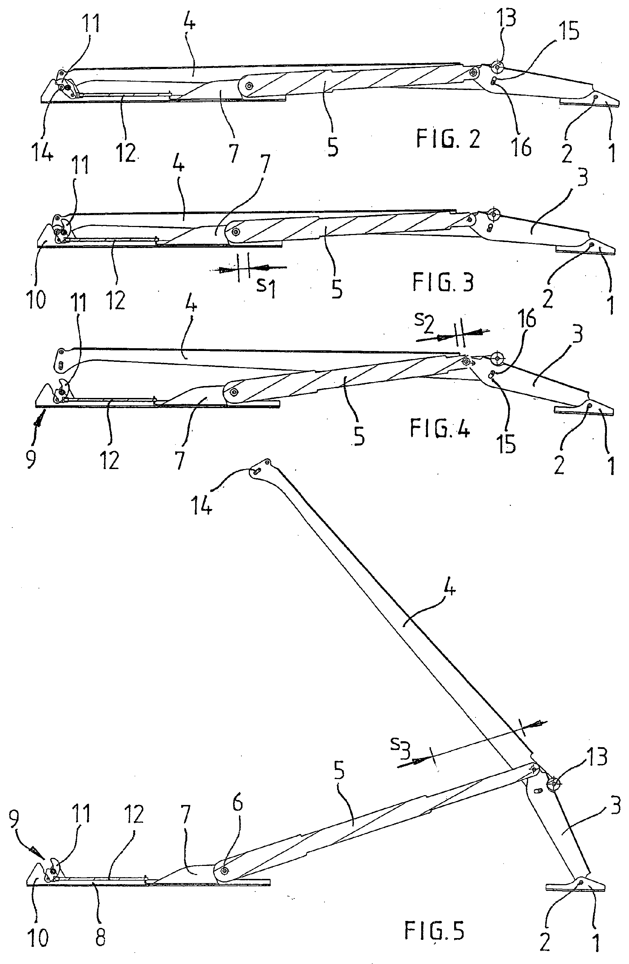

Der vordere Tragarm 4 ist über eine Querbolzen 16 in einem Langloch 15 des vorderen Teils des hinteren Tragarmes 3 gelagert und stützt sich über eine ebenfalls im Endbereich des vorderen Tragarms 4 gelagerte Stützrolle 13 auf der nach oben gerichteten Stirnseite des hinteren Tragarms 3 ab, auf der in kaum angehobenen Zustand des aufstellbaren Dachflächenanteils dieses auch aufliegt. Anhand der Figuren 2 bis 5 lässt sich der Bewegungsablauf der Aufstellmechanik beschreiben.

Die Figur 2 zeigt die Aufstellmechanik zunächst im vollständig abgesenkten und verriegeltem Zustand mit vollkommen zusammengezogenem Elektrohubzylinder 5 mit von diesem nach hinten gezogenen Schlitten 7, der über die Stange 12 und eine exzentrische Anlenkung an dem Schließhebel 11, diesen um dessen Drehachse mit seinem Schließhaken verdreht über den Schließbolzen 14 des vorderen Tragarmes 4 verriegelt hält.

Figur 3 zeigt eine erste Zwischenposition nach geringfügigem Auseinanderfahren des Hubzylinders um einen Weg (S1), der dadurch den Schlitten 7 nach vorne bewegt und durch die exzentrische Anlenkung der Stange 7 den Schließhebel 11 so weit verdreht hat, dass dessen Schließhaken den Schließbolzen 14 des vorderen Tragarmes 4 frei gibt.

Ein weiterer Zwischenschritt ist in Fig. 4 dargestellt, in dem der Hubzylinder 5 um einen Weg (S2) so weit auseinander gefahren ist, dass der hintere Tragarm 3 so weit um seine ortsfeste Schwenkachse 2 nach oben verschwenkt ist, dass der Querbolzen 16 des vorderen Tragarmes 4 das obere Ende des Langloches 15 im hinteren Tragarm 3 erreicht hat und sich über die Stützrolle 13 auf dem hinteren Tragarm 3 abstützt, so dass ab dieser Position der vordere Tragarm 4 stetig mit ausgelenkt wird, der ab dieser Position den aufstellbaren Dachflächenanteil bewegt, was zuvor über die Stützrolle 13 erfolgte, die auf der Stirnseite des hinteren Tragarmes 3 aufliegt.

In der Fig. 5 ist eine um einen weiteren Weg (S3) weiter vollständig geöffnete Aufstellmechanik dargestellt, die aufgrund der Ausführung des Hubzylinders als Elektrohubzylinder auch ohne Stromzufuhr das zeichnerisch nicht dargestellte Aufstelldach sicher in der angehobenen Position hält.

## Patentansprüche

1. Aufstelldach für ein Fahrzeug oder einen Fahrzeuganhänger mit einem aufstellbaren Dachflächenanteil und flexiblen Seitenwänden und beidseitig mit jeweils einem hinteren Gelenkbeschlag und einer vorderen Aufstellmechanik, letztere aus einem hinteren Tragarm (3) mit einer hinteren Schwenkachse (2), einem am hinteren Tragarm (3) verschwenkbar angelenkten vorderen Tragarm (4) und einem Stützelement mit einer hinteren Schwenkachse mit einer Gelenkverbindung mit dem vorderen Ende des hinteren Tragarms (3) und mit einer vorderen Schwenkachse sowie einem Linearantrieb, **dadurch gekennzeichnet, dass** das Stützelement als Hubzylinder (5) mit integriertem Linearantrieb ausgeführt ist und dass die hintere Schwenkachse (2) des hinteren Tragarms (3) ein karosseriefestes hinteres Gegenlager (1) bildet und der hintere Tragarm (3) im zusammen-gefahrenen Zustand des Hubzylinders (5) eine liegende Ruheposition einnimmt und in einem ausgefahrenen Zustand des Hubzylinders (5) in eine angestellte Öffnungsposition verschwenkt ist.

2. Aufstelldach nach Anspruch 1, **dadurch gekennzeichnet, dass** der Hubzylinder (5) als Elektrohubzylinder mit integriertem Elektromotor ausgebildet ist.

3. Aufstelldach nach einem der vorgenannten Ansprüche, **dadurch gekennzeichnet, dass** das vordere Ende des Hubzylinders (5) um eine Schwenkachse (6) eines Schlittens (7) schwenkgelagert ist, der in einer karosseriefesten Schlittenbahn (8) geführt ist, an dem eine Stange (12) angelenkt ist, die sich nach vorne erstreckt und an einem gelenkig gelagerten Schließhebel (11) einer Bolzenaufnahme (10) angreift.

4. Aufstelldach nach Anspruch 3, **dadurch gekennzeichnet, dass** in einer verriegelten Position des Aufstelldachs mit nach hinten bewegtem Schlitten (7) ein Schließbolzen (14) des freien Endes des vorderen Tragarmes (4) oder des Dachflächenanteils in die Bolzenaufnahme (10) eingreift und der Schließhebel (11) den Schließbolzen (14) verriegelt hält, in einer ersten Zwischenposition, nach geringem Auseinanderfahren des Hubzylinders (5) und nach vorne Verfahrens des Schlittens (7) der Schließhebel (11) von der Stange (12) in eine Entriegelungsposition verschwenkt und der Schließbolzen (14) freigegeben ist, in einer zweiten Zwischenposition der Hubzylinder (5) den hinteren Schwenkarm (3) soweit angehoben hat, bis der vordere Schwenkarm (4) formschlüssig mit diesem verriegelt, der aus dieser zweiten Zwischenposition durch weiteres Auseinanderfahren des Hubzylinders (5) bis zur Öffnungsstellung mit verschwenkt ist.

5. Aufstelldach nach einem der vorgenannten Ansprüche, **dadurch gekennzeichnet, dass** der vordere Tragarm (4) gegenüber dem hinteren Tragarm (3) an seinem nach hinten gerichteten Ende mittels eines Querbolzens (16) gelenkig in einem Langloch (15) des hinteren Tragarmes (3) verschieb- und verschwenkbar geführt ist und dort einen Endanschlag als Bewegungsbegrenzung aufweist, der gleichzeitig als Stützrolle (13) für den aufstellbaren Dachflächenanteil ausgebildet ist.

## Claims

1. Pop-up roof for a vehicle or a vehicle trailer with a roof surface portion which can be popped up, and with flexible side walls, and on both sides with a respective rear hinge fitting and a front pop-up mechanism, the latter consisting of a rear supporting arm (3) with a rear pivot axis (2), a front supporting arm (4) coupled pivotably to the rear supporting arm (3), and a support element with a rear pivot axis, with a hinge connection to the front end of the rear supporting arm (3), and with a front pivot axis, and also a linear drive, **characterized in that** the support element is designed as a lifting cylinder (5) with an integrated linear drive, and **in that** the rear pivot axis (2) of the rear supporting arm (3) forms a body-mounted rear counterbearing (1), and, in the retracted state of the lifting cylinder (5), the rear supporting arm (3) takes up a horizontal inoperative position and, in an extended state of the lifting cylinder (5), is pivoted into an open position leaning against the latter.

2. Pop-up roof according to Claim 1, **characterized in that** the lifting cylinder (5) is designed as an electric lifting cylinder with an integrated electric motor.

3. Pop-up roof according to either of the preceding claims, **characterized in that** the front end of the lifting cylinder (5) is pivotally mounted about a pivot axis (6) of a slide (7) which is guided in a body-mounted slideway (8) and to which a rod (12) is coupled, which rod extends forwards and acts on a hingedly mounted locking lever (11) of a bolt receptacle (10).

4. Pop-up roof according to Claim 3, **characterized in that**, in a locked position of the pop-up roof with the slide (7) moved rearwards, a locking bolt (14) of the free end of the front supporting arm (4) or of the roof surface portion engages in the bolt receptacle (10) and the locking lever (11) keeps the locking bolt (14) locked; in a first intermediate position, after a small extension of the lifting cylinder (5) and forwards movement of the slide (7), the locking lever (11) is pivoted by the rod (12) into an unlocking position and the locking bolt (14) is released; in a second intermediate position the lifting cylinder (5) has raised the rear pivoting arm (3) to an extent such that the front pivoting arm (4) locks in an interlocking manner therewith and is pivoted at the same time out of said second intermediate position as far as the open position by further extension of the lifting cylinder (5).

5. Pop-up roof according to one of the preceding claims, **characterized in that** the front supporting arm (4) is guided displaceably and pivotably at the rearwardly directed end thereof in relation to the rear supporting arm (3) in a hinged manner by means of a transverse bolt (16) in an elongated hole (15) of the rear supporting arm (3) where it has an end stop as a means of limiting the movement, said end stop being designed at the same time as a support roller (13) for the roof surface portion which can be popped up.

## Revendications

1. Toit relevable destiné à un véhicule ou à une remorque de véhicule comportant une partie de surface de toit relevable et des parois latérales flexibles et munie respectivement des deux côtés d'une ferrure articulée arrière et d'un mécanisme de relevage avant, ces derniers étant constitués d'un bras de support arrière (3) ayant un axe de pivotement arrière (2), d'un bras de support avant (4) s'articulant de maniére pivotante sur le bras de support arrière (3) et d'un élément de support ayant un axe de pivotement arrière muni d'une articulation reliée à l'extrémité avant du bras de support arrière (3) et ayant un axe de pivotement avant ainsi qu'un mécanisme d'entraînement linéaire, **caractérisé en ce que** l'élément de support est réalisé sous la forme d'un vérin de levage (5) ayant un mécanisme d'entraînement linéaire intégré et **en ce que** l'axe de pivotement arrière (2) du bras de support arrière (3) forme une butée arrière (1) solidaire de la carrosserie et **en ce que** le bras de support arrière (3) passe à une position de repos correspondant à l'état de course commune du vérin de levage (5) et **en ce qu'**il est amené à pivoter dans un état déployé du vérin de levage (5) à une position d'ouverture utilisée.

2. Toit relevable selon la revendication 1, **caractérisé en ce que** le vérin de levage (5) est réalisé sous la forme d'un vérin de levage électrique ayant un moteur électrique intégré.

3. Toit relevable selon l'une quelconque des revendications précédentes, **caractérisé en ce que** l'extrémité avant du vérin de levage (5) est montée pivotante autour d'un axe de pivotement (6) d'un chariot (7) qui est guidé dans une piste de chariot (8) solidaire de la carrosserie, sur laquelle s'articule une tige (12) qui s'étend vers l'avant et vient en prise avec un levier de fermeture (11), monté articulé, d'un logement de boulon (10).

4. Toit relevable selon la revendication 3, **caractérisé en ce que**, à une position verrouillée du toit relevable, un boulon de fermeture (14) de l'extrémité libre du bras de support avant (4) ou de la partie de surface de toit, s'engage au moyen du chariot (7) déplacé vers l'arrière dans le logement de boulon (10) et **en ce que** le levier de fermeture (11) maintient le boulon de fermeture (14) verrouillé à une première position intermédiaire après une faible course de sortie du vérin de levage (5) et après un déplacement vers l'avant du chariot (7), le levier de fermeture (11) est amené à pivoter par rapport à la tige (12) à une position de déverrouillage et le boulon de fermeture (14) est libéré, à une seconde position intermédiaire, le vérin de levage (5) a relevé le bras pivotant arrière (3) jusqu'à ce que le bras pivotant avant (4) se verrouille avec celui-ci par complémentarité de forme, lequel bras pivotant est amené à pivoter par rapport à ladite seconde position intermédiaire du fait d'une course de sortie supplémentaire du vérin de levage (5) jusqu'à la position d'ouverture.

5. Toit relevable selon l'une quelconque des revendications précédentes, **caractérisé en ce que** le bras de support avant (4) est guidé de manière articulée par coulissement et pivotement par rapport au bras de support arrière (3) sur son extrémité orientée vers l'arrière au moyen d'un boulon transversal (16) dans un orifice longitudinal (15) du bras de support arrière (3) et présente à cet emplacement une butée d'extrémité utilisée en tant que limite du mouvement, qui est simultanément réalisée sous la forme d'un rouleau de support (13) pour la partie de surface de toit relevable.
